# FASCICULE DE BREVET EUROPEEN

(11) **EP 3 155 358 B1**
(45) Date de publication et mention de la délivrance du brevet: **22.08.2018**
(21) Numéro de dépôt: 15722220.9
(22) Date de dépôt: 13.05.2015
(51) Int. Cl.: F41G 7/26

(54) **SYSTEME DE GUIDAGE DE MISSILES POUR VEHICULES ET CIBLES MOBILES**
SYSTEM ZUM LENKEN VON RAKETEN FÜR FAHRZEUGE UND BEWEGLICHE ZIELE
SYSTEM FOR GUIDING MISSILES FOR VEHICLES AND MOVING TARGETS

(30) Priorité: 13.06.2014 BE 201400450
(43) Date de publication de la demande: 19.04.2017
(73) Titulaire: CMI Defence S.A., 4431 Loncin (BE)
(72) Inventeur: RONDEUX, Christian, B-4000 Liège (BE); BALTHASART, Pierre, B-4140 Sprimont (BE)
(74) Mandataire: Pronovem
(86) Numéro de dépôt international: PCT/EP2015/060711
(87) Numéro de publication internationale: WO 2015/189003

(56) Documents cités:
- DE-A1- 4 137 843
- DE-A1- 4 203 474
- FR-A1- 2 004 425
- US-A- 3 489 057
- US-A- 5 197 691

## Description

### Objet de l'invention

La présente invention ressort du domaine technique des systèmes de guidage de missiles au sein d'unités mobiles et/ou de chars de combat et avec des cibles mobiles.

### Etat de la technique

On connaît les systèmes de guidage laser pour missiles de type « beamrider », dans lesquels un récepteur de signal laser se trouvant dans la partie arrière du missile détecte le signal laser, l'analyse et détermine la position du missile. Celui-ci se centre automatiquement par rapport au faisceau. Deux patterns alternés assurent un codage de la position horizontale et verticale du missile.

Ce système de guidage est réputé très précis en mode statique. Toutefois, lorsque le missile est lancé par exemple à partir d'une tourelle de véhicule blindé en conditions opérationnelles réelles, c'est-à-dire lorsque le véhicule ou la cible sont en mouvement et particulièrement sur terrain accidenté ou en présence de vent, la précision du guidage est dégradée.

Par ailleurs, il est connu qu'actuellement une tourelle de véhicule blindé comprend typiquement un système de visée ou viseur (*sight system*) qui met une voie jour et une voie nuit (ou thermique) à disposition de l'artilleur et du commandant ainsi qu'un télémètre laser. L'artilleur et le commandant ont chacun à disposition une station avec poignée de commande (*joystick*)*,* qui permet de donner la commande en azimut et en élévation (ou hauteur ou altitude) au viseur et donc de modifier la ligne de visée, ainsi qu'un écran de contrôle. Le viseur du commandant fournit en plus une vision en panoramique. L'image dans le viseur est gyrostabilisée par rapport à la terre grâce à un système gyroscopique intégré. Cela signifie que la ligne de visée reste parallèle à elle-même quels que soient les mouvements du véhicule. La ligne de visée et la ligne de feu sont parallèles entre elles, grâce au système de contrôle de puissance qui commande la tourelle en azimut et le canon en élévation, selon les valeurs communiquées par le viseur.

Le système de guidage, comprenant une ligne laser et une caméra de contrôle parfaitement harmonisées, c'est-à-dire alignées ou mises en correspondance optiquement, est fixé au lanceur ou au véhicule, de façon intégrée ou non au système de visée du véhicule, ou encore sur un poste séparé du véhicule. Selon l'état de la technique, les moyens pour modifier la direction de la ligne de guidage laser sont rudimentaires et ne permettent pas un contrôle fin, fluide et régulier pour engager une cible mobile. Actuellement, toute modification de la ligne de guidage est faite manuellement, sans aide de l'optique, soit en déplaçant la tourelle, soit en déplaçant le système de guidage du missile. Ceci entraîne des performances plutôt médiocres et offre également peu de possibilités de tir.

Le document DE 42 03 474 A1 divulgue un dispositif de visée pour artilleur d'un véhicule blindé, dans lequel l'artilleur observe la cible par l'intermédiaire d'un périscope jour/nuit installé dans la tourelle, dont l'axe optique est harmonisé avec l'axe d'un télémètre laser intégré, fonctionnant selon le principe de retour d'impulsion. Afin d'optimiser la portée et la précision de tir, on prévoit, dans le domaine fonctionnel du télémètre laser, un émetteur laser de guidage comme entité séparée, dans le faisceau de guidage duquel vole un projectile muni d'un récepteur dans sa partie arrière et dont l'axe optique est généré de manière à être harmonisé avec l'axe optique du périscope jour/nuit. L'émetteur laser de guidage est disposé dans la tourelle du char dans la région comprise entre le périscope jour/nuit et les modules réactifs du blindé se trouvant derrière le poste de visée. Un dispositif de ce type équipait le char Leopard II.

Dans le document DE 41 37 843 A1, le système d'armement inclut un module de visée équipé d'un télémètre laser intégré. Un faisceau laser est modulé à l'extérieur du module de visée et couplé au chemin optique du télémètre laser via un miroir de renvoi, pour servir de faisceau de guidage d'un projectile guidé à distance.

Les limites recensées de stabilité et de précision du tir de missile, dans le cas des solutions de l'état de la technique, sont liées le cas échéant :
- au mouvement à l'intérieur du véhicule (occupants, moteur, vent, etc.) ;
- au cas du tir sur cible en mouvement ;
- au véhicule se trouvant en déplacement ; dans ce cas, l'utilisation du système d'optique peut s'envisager mais ce n'est pas vraiment préconisé car il y aurait beaucoup de conditions à remplir (terrain plat, etc.).

### Buts de l'invention

La présente invention vise à fournir une solution où la ligne de guidage laser est parfaitement stabilisée dans les cas où le lanceur se trouve sur un véhicule en mouvement, en proie au vent ou aux vibrations, éventuellement sur terrain accidenté ou lorsque la cible se déplace.

### Principaux éléments caractéristiques de l'invention

Un premier aspect de l'invention se rapporte à un véhicule blindé selon la revendication 1.

Selon des modes d'exécution préférés de l'invention, le véhicule blindé comporte au moins une, ou encore une combinaison appropriée, des caractéristiques suivantes :
- la plateforme motorisée asservie comporte un système de miroirs deux axes, respectivement en élévation et en azimut, ou un système de suspension à cardan ou gimbal ;
- le véhicule comporte des moyens pour sélectionner le guidage laser soit en mode LOS, soit en mode ALOS ;
- lesdits moyens comportent la communication de paramètres d'offset pour l'élévation et l'azimut par le contrôleur de tourelle au dispositif de motorisation de la tourelle et du canon ainsi qu'au guidage de missile par laser, les valeurs des paramètres d'offset étant différentes en mode LOS et en mode ALOS ;
- le dispositif de guidage de missile par laser est asservi au signal de position de la ligne de visée relativement au référentiel inertiel, via deux boucles d'asservissement respectivement en élévation et en azimut.

Un deuxième aspect de l'invention se rapporte à une méthode de tir de missile au moyen du véhicule blindé comme décrit ci-dessus, caractérisé par les étapes suivantes :
- un artilleur ou un commandant détermine les paramètres de visée pour engager une cible avec la voie jour ou la voie nuit du système de visée gyrostabilisé ou encore avec la caméra du système de guidage laser et assigne le mode de guidage du missile souhaité, LOS ou ALOS ;
- les valeurs d'élévation pour le canon et d'azimut pour la tourelle sont fournies au système de contrôle de puissance ;
- le système de contrôle de puissance positionne la tourelle et le canon en position de tir ;
- le contrôleur de tourelle indique le mode de guidage, LOS ou ALOS, au dispositif de guidage de missile par laser ;
- le laser de guidage est orienté par asservissement aux paramètres de visée, la ligne de guidage laser étant alors parallèle à la ligne de visée ;
- l'artilleur ou le commandant tire le missile et celui-ci est guidé par le laser de guidage.

Un troisième aspect de la présente invention se rapporte à l'utilisation du véhicule blindé comme décrit ci-dessus, en situation de tir sur cible mobile, de roulage contrôlé du véhicule blindé, de vibrations ou de vent fort.

### Brève description des figures

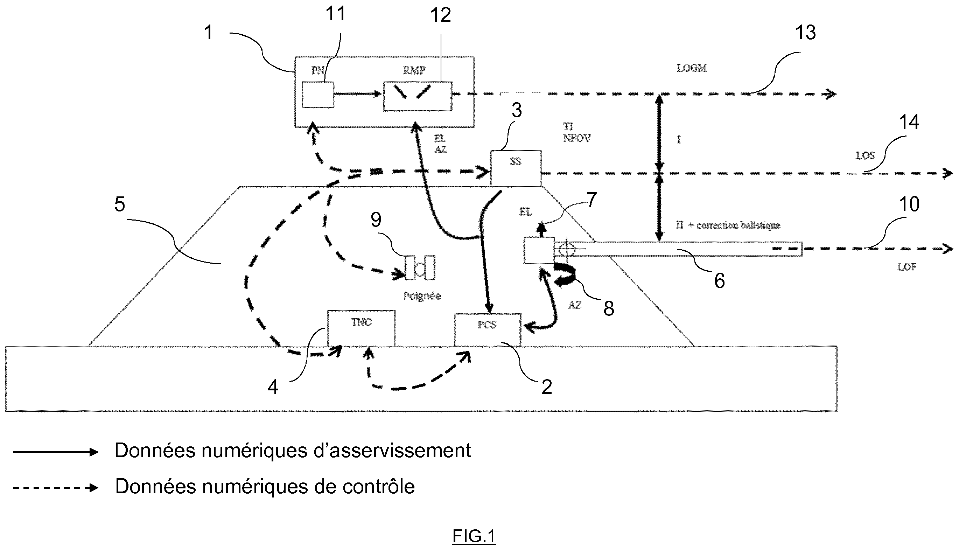

La figure 1 représente schématiquement un système de guidage de missiles à précision améliorée selon la présente invention.

### Description de formes d'exécution préférées de l'invention

L'idée à la base de l'invention est de profiter de la précision du système de visée optique pour asservir la ligne de guidage du missile et obtenir ainsi la même précision pour le guidage que pour la visée optique. Le système selon l'invention est représenté schématiquement à la figure 1.

On souhaite, surtout lorsque le véhicule est en mouvement, tirer profit de la mise à disposition d'un référentiel inertiel, en l'occurrence asservir la ligne de guidage laser 13 à ce référentiel inertiel, par exemple via une plateforme motorisée asservie 12. Le système gyroscopique utilisé (non représenté) peut alors être soit celui associé habituellement au système de visée 3, soit peut être intégré à ladite plateforme 12.

Toutefois les inventeurs ont retenu, comme solution préférée, une forme d'exécution où le système de visée 3 est complètement indépendant du système de guidage 1, dans la mesure où cette solution permet notamment de rester indépendant du fournisseur d'optique. Ainsi le système de guidage 1 pourra bénéficier de la précision des informations fournies par le viseur optique stabilisé mais sans devoir y être intégré et il pourra donc être ajouté ou remplacé par la suite sans modification du viseur existant, par exemple lors d'une mise à niveau du système de guidage 1.

Selon cette forme d'exécution de l'invention, on stabilise le laser de guidage 11 par asservissement des moyens de modification de la ligne de guidage au système de visée gyrostabilisé 3. Ces moyens de modification de la ligne de guidage sont par exemple une plateforme fixe 12 avec deux miroirs mobiles en azimut et élévation respectivement. L'avantage de ce système est une inertie moindre et une grande réactivité. Les moyens de modification de la ligne de guidage peuvent encore être par exemple une plateforme mobile 12 de type suspension à cardan (*gimbal*) motorisée selon deux axes, en azimut et élévation respectivement. Ainsi, la ligne de guidage laser 13 reste constamment parallèle à la ligne visée 14 et est toujours pointée vers la cible, quels que soient les mouvements de la tourelle 5 ou de la caisse du véhicule blindé.

Le système de contrôle de puissance 2 (PCS, *power control system*) commande la tourelle 5 en azimut 8 et le canon 6 en élévation 7. Les paramètres de visée fournis par l'artilleur ou le commandant au système de visée gyrostabilisé 3 permettent le changement de la ligne de visée 14 via la commande d'un miroir (non représenté). Une caméra (non représentée) répercute alors la ligne de visée modifiée sur l'écran de contrôle de l'artilleur/du commandant. Ces paramètres sont fournis également au PCS 2 comme valeurs d'élévation 7 du canon 6 et d'azimut 8 de la tourelle 5. Il y a avantageusement à ce niveau une boucle de contrôle à partir d'un capteur d'angle en élévation du canon 6. Les corrections balistiques sont injectées dans la boucle d'asservissement de l'élévation du canon (non représenté).

Selon l'invention, le signal de position absolue du miroir de visée par rapport à la tourelle est dupliqué et injecté dans le système de contrôle des miroirs du laser de guidage (ou alternativement de la plateforme motorisée 12 de type « gimbal »). La position absolue du miroir de visée par rapport à la tourelle est alors transmise aux miroirs du laser. Le résultat est donc un asservissement des miroirs du laser de guidage (ou de la plateforme motorisée du laser de guidage) dans le référentiel terrestre (inertiel) via la position absolue du miroir de visée par rapport à la tourelle, la tourelle servant de référence intermédiaire par rapport au référentiel inertiel. Au final, la ligne de guidage laser 13 reste automatiquement et constamment parallèle à la ligne de visée 14.

Par exemple, l'artilleur engage sa cible avec la voie thermique en champ de vision super étroit ou la voie jour en champ de vision étroit et détermine le mode de guidage qu'il souhaite :
- mode "au-dessus de la ligne de visée" ou ALOS (*above line of sight*) *;*
- mode "ligne de visée" ou LOS (*line of sight*)*.*

Concrètement, en mode ALOS, le missile vole au-dessus de la ligne de visée 14 et, en mode LOS, le missile vole sur la ligne de visée 14. L'angle d'élévation 7 du système de contrôle de puissance 2 ne sera donc pas le même en mode LOS et en mode ALOS grâce à des systèmes d'offsets différents en mode ALOS et LOS, de manière complètement transparente pour l'opérateur. Ceci permet de ne pas éclairer la cible avec le faisceau laser de guidage 13 qui peut être détecté par certaines cibles (ex. chars d'assaut). Le contrôleur de tourelle 4 (TNC, *turret network controller*) prévient le PCS 2 qu'il doit se mettre dans un mode particulier.

La plateforme de guidage motorisée 12 (RMP, *remotely motorized platform)* ne sait pas si on est en mode ALOS ou LOS, car elle est asservie au système de visée 3 quel que soit le mode utilisé. Dans un mode comme dans l'autre, la visée jour ou nuit est toujours pointée sur la cible.

Selon l'invention, la trajectoire du missile est corrigée automatiquement. Le laser répond à des commandes spécifiques. Le système de tourelle commande le laser pour qu'il fonctionne selon la phase de guidage dans laquelle on se trouve et permet que la ligne de visée reste bien stable. Le RMP positionne son ou ses miroirs pour que le laser se positionne dans la direction de visée.

L'originalité de l'invention dans une forme d'exécution préférée est donc de pouvoir engager une cible avec une des caméras performantes du viseur, soit la caméra jour (N/B ou couleur), soit la caméra nuit thermique) et/ou avec la caméra N/B du guidage laser.

Les avantages de l'invention sont :
- une finesse et une précision de pointage laser de loin supérieures aux systèmes de l'art antérieur : meilleure stabilisation et réglage plus fin, meilleure probabilité sur cible mobile ;
- une indépendance mécanique totale par rapport au système de visée : on peut donc choisir n'importe quel système de visée compatible avec le cahier des charges de la tourelle ;
- une flexibilité plus grande que d'avoir le tout proposé et intégré dans un viseur conçu pour recevoir le guidage, ce qui serait de surcroît plus encombrant ;
- dans des environnements contrôlés, possibilité de faire du tir en mode « roulage ».

L'inconvénient de l'invention est cependant d'avoir un système supplémentaire à intégrer dans la tourelle (système de contrôle de plateforme de guidage).

### Liste des symboles de référence

- 1: unité de guidage de missile
- 2: système de contrôle de puissance
- 3: système de visée gyrostabilisé
- 4: contrôleur de tourelle
- 5: tourelle
- 6: canon
- 7: angle d'élévation
- 8: angle d'azimut
- 9: poignée de commande artilleur (ou commandant)
- 10: ligne de feu
- 11: laser de guidage
- 12: plateforme motorisée asservie (avec ou sans miroirs)
- 13: ligne de guidage LOS ou ALOS
- 14: ligne de visée

## Revendications

1. Véhicule blindé comportant une tourelle (5) avec un canon (6), un système de visée (3) installé dans la tourelle (5) et muni d'une voie jour, d'une voie nuit ou thermique et d'un télémètre laser, un système de contrôle de puissance (2) pour commander le déplacement de la tourelle (5) en azimut (8) et celui du canon (6) en élévation (7), un dispositif de guidage de missile par laser (1) générant une ligne de guidage laser (13) et un contrôleur de tourelle (4) déterminant le mode de guidage du missile, le système de visée (3) comprenant des moyens configurés pour gyrostabiliser une ligne de visée (14) par rapport à un référentiel inertiel, le véhicule blindé comportant enfin des moyens configurés pour gyrostabliser la ligne de guidage laser (13) qui sont des moyens d'asservissement de la ligne de guidage laser (13) à la ligne de visée gyrostabilisée (14) fournie par le système de visée (3), lesdits moyens d'asservissement étant configurés de sorte que la ligne de guidage laser (13) est en permanence parallèle à la ligne de visée (14), le dispositif de guidage de missile par laser (1) comportant des moyens de modification de la ligne de guidage laser comportant une plateforme motorisée asservie (12) selon deux axes, en élévation (7) et en azimut (8), les moyens de gyrostabilisation de la ligne de visée et les moyens de modification de la ligne de guidage laser étant séparés.

2. Véhicule blindé selon la revendication 1, **caractérisé en ce que** la plateforme motorisée asservie (12) comporte un système de miroirs deux axes, respectivement en élévation (7) et en azimut (8), ou un système de suspension à cardan ou gimbal.

3. Véhicule selon la revendication 1, **caractérisé en ce qu'**il comporte des moyens configurés pour sélectionner le guidage laser soit en mode ligne de visée, LOS, soit en mode au-dessus de la ligne de visée, ALOS.

4. Véhicule selon la revendication 3, **caractérisé en ce qu'**il comporte des moyens configurés pour la communication de paramètres d'offset pour l'élévation (7) et l'azimut (8) par le contrôleur de tourelle (4) au dispositif de motorisation de la tourelle et du canon ainsi qu'au guidage de missile par laser (1), les valeurs des paramètres d'offset étant différentes en mode LOS et en mode ALOS.

5. Véhicule blindé selon la revendication 1, **caractérisé en ce que** le dispositif de guidage de missile par laser (1) est asservi au signal de position de la ligne de visée relativement au référentiel inertiel, via deux boucles d'asservissement respectivement en élévation (7) et en azimut (8).

6. Méthode de tir de missile au moyen du véhicule blindé selon l'une quelconque des revendications 2 à 5, **caractérisée par** les étapes suivantes :
- un artilleur ou un commandant détermine les paramètres de visée pour engager une cible avec la voie jour ou la voie nuit du système de visée gyrostabilisé (3) ou encore avec la caméra du système de guidage laser et assigne le mode de guidage du missile souhaité, LOS ou ALOS ;
- les valeurs d'élévation (7) pour le canon (6) et d'azimut (8) pour la tourelle (5) sont fournies au système de contrôle de puissance (2) ;
- le système de contrôle de puissance (2) positionne la tourelle (5) et le canon (6) en position de tir ;
- le contrôleur de tourelle (4) indique le mode de guidage, LOS ou ALOS, au dispositif de guidage de missile par laser (1) ;
- le laser de guidage (11) est orienté par asservissement aux paramètres de visée, la ligne de guidage laser (13) étant alors parallèle à la ligne de visée (14) ;
- l'artilleur ou le commandant tire le missile et celui-ci est guidé par le laser de guidage (11).

7. Utilisation du véhicule blindé selon l'une quelconque des revendications 1 à 5, en situation de tir sur cible mobile, de roulage contrôlé du véhicule blindé, de vibrations ou de vent fort.

## Patentansprüche

1. Panzerfahrzeug, mit einem Turm (5) mit einer Kanone (6), einem im Turm (5) installierten Zielungssystem (3) mit einer Tagesspur, einer Nacht- bzw. thermischen Spur und einem Laserentfernungsmesser, ein Leistungsregelungssystem (2) zur Steuerung der Verschiebung des Turmes (5) in Azimutrichtung und zur Steuerung der Höhenverschiebung (7) der Kanone (6), ein Laserflugkörperführungssystem (1), das eine Laserführungslinie (13) erzeugt, und eine Turmsteuerung (4), die den Zielungsmodus des Flugkörpers bestimmt, wobei das Zielungssystem (3) Mittel umfasst, die zur Kreiselstabilisierung einer Sichtlinie (14) relativ zu einem inertialen Bezugspunkt konfiguriert sind, wobei das Panzerfahrzeug letztlich Mittel umfasst, die zur Kreiselstabilisierung der Laserführungslinie (13) konfiguriert sind, bei denen es sich um Mittel zur Unterordnung der Laserführungslinie (13) zur vom Zielungssystem (3) bereitgestellten, kreiselstabilisierten Sichtlinie (14) handelt, wobei die Unterordnungsmittel derart konfiguriert sind, dass die Laserführungslinie (13) dauerhaft parallel zur Sichtlinie (14) verläuft, wobei das Laserflugkörperführungssystem (1) Mittel zur Modifikation der Laserführungslinie umfasst, die eine motorisierte Plattform (12) umfassen, die entlang zwei Achsen, d.h. Elevation (7) und Azimut (8), gesteuert wird, wobei die Mittel zur Kreiselstabilisierung der Sichtlinie und die Mittel zur Modifikation der Laserführungslinie getrennt sind.

2. Panzerfahrzeug nach Anspruch 1, **dadurch gekennzeichnet, dass** die motorisierte Plattform (12) ein Spiegelsystem mit zwei Achsen, d.h. Elevation (7) bzw. Azimut (8), oder ein Kardan- oder Gimbalaufhängungssystem umfasst.

3. Fahrzeug nach Anspruch 1, **dadurch gekennzeichnet, dass** es Mittel umfasst, die zur Auswahl des Laserführungsmodus entweder als Sichtlinienmodus, LOS, oder als Übersichtlinienmodus, ALOS, konfiguriert sind.

4. Fahrzeug nach Anspruch 3, **dadurch gekennzeichnet, dass** es Mittel umfasst, die zur Übermittlung von Versatzparameter für Elevation (7) und Azimut (8) über die Turmsteuerung (4) an die Motorisierungsvorrichtung des Turmes und der Kanone sowie die Laserflugkörperführung (1) konfiguriert sind, wobei die Werte der Versatzparameter im LOS-Modus anders sind als im ALOS-Modus.

5. Panzerfahrzeug nach Anspruch 1, **dadurch gekennzeichnet, dass** die Laserflugkörperführungsvorrichtung (1) dem Lagesignal der Sichtlinie relativ zum inertialen Bezugspunkt über zwei Rückkopplungsschleifen, d.h. für Elevation (7) und Azimut (8), untergeordnet ist.

6. Verfahren zum Abschießen eines Flugkörpers mittels des Panzerfahrzeugs nach einem der Ansprüche 2 - 5, **gekennzeichnet durch** folgende Schritte:
- Festlegen der Zielungsparameter durch einen Artelleristen bzw. Kommandeur zum Angreifen eines Ziels mit der Tages- oder Nachtspur des kreiselstabilisierten Zielungssystems (3) oder mit der Kamera des Laserführungssystems und Auswählen des gewünschten Flugkörperführungsmodus aus LOS und ALOS;
- Bereitstellen der Elevationswerte (7) für die Kanone (6) und die Azimutwerte (8) des Turmes (5) an das Leistungsregelungssystem (2);
- Positionieren des Turmes (5) und der Kanone (6) in Schussposition durch das Leistungsregelungssystem (2);
- Angeben des Führungsmodus - LOS oder ALOS - gegenüber dem Laserflugkörperführungssystem (1) durch die Turmsteuerung (4);
- Orientieren des Führungslasers (11) anhand der Zielungsparameter, wobei die Laserführungslinie (13) dann parallel zur Sichtlinie (14) verläuft;
- Abschießen des Flugkörpers durch den Artilleristen bzw. Kommandeur, wobei der Flugkörper durch den Führungslaser (11) geführt wird.

7. Verwendung des Panzerfahrzeugs nach einem der Ansprüche 1 - 5 beim Schießen auf ein bewegliches Ziel, bei kontrolliertem Rollen des Panzerfahrzeugs oder bei starken Vibrationen oder starkem Wind.

## Claims

1. An armored vehicle comprising a turret (5) with a cannon (6), a sight system (3) installed in the turret (5) and provided with a day channel, a night or thermal channel and a laser telemeter, a power control system (2) to command the movement of the turret (5) in azimuth (8) and that of the cannon (6) in elevation (7), a laser missile guidance device (1) generating a laser guidance line (13) and a turret network controller (4) determining the guidance mode of the missile, the sight system (3) comprising means configured for gyrostabilizing a line of sight (14) relative to an inertial frame of reference, the armored vehicle lastly comprising means configured for gyrostabilizing the laser guidance line (13) that are means for servo-controlling the laser guidance line (13) with respect to the line of sight gyrostabilized (14) provided by the sight system (3), the means for servo-controlling being configured so that the laser guidance line (13) is continuously parallel to the line of sight (14), the laser missile guidance device (1) comprising means for modifying the laser guidance line comprising a motorized platform (12) servo-controlled along two axes, in elevation (7) and in azimuth (8), the means for gyrostabilizing the line of sight and the means for modifying the laser guidance line being separated.

2. The armored vehicle according to claim 1, **characterized in that** the servo-controlled motorized platform (12) comprises a system of mirrors with two axes, respectively in elevation (7) and in azimuth (8), or a gimbal system.

3. The vehicle according to claim 1, **characterized in that** it comprises means configured for selecting the laser guidance either in mode line of sight, LOS, or in mode above the line of sight, ALOS.

4. The vehicle according to claim 3, **characterized in that** it comprises means configured for the communication of offset parameters for the elevation (7) and the azimuth (8) by the turret network controller (4) to the motorization device of the turret and of the cannon as well as to the laser missile guidance (1), the values of the offset parameters being different in LOS and ALOS mode.

5. The armored vehicle according to claim 1, **characterized in that** the laser missile guidance device (1) is servo-controlled with respect to the position signal of the line of sight relative to the inertial frame of reference, via two feedback loops, in elevation (7) and in azimuth (8), respectively.

6. A missile firing method using the armored vehicle according to any one of claims 2 to 5, **characterized by** the following steps:
- a gunner or a commander determines the sight parameters to engage a target with the day channel or the night channel of the gyrostabilized sight system (3) or with the camera of the laser guidance system and assigns the desired guidance mode of the missile, LOS or ALOS;
- the elevation (7) value for the cannon (6) and azimuth (8) value for the turret (5) are provided to the power control system (2);
- the power control system (2) positions the turret (5) and the cannon (6) in the firing position;
- the turret network controller (4) indicates the guidance mode, LOS or ALOS, to the laser missile guidance device (1);
- the guidance laser (11) is oriented by servo-control with respect to the sight parameters, the laser guidance line (13) being then parallel to the line of sight (14);
- the gunner or the commander fires the missile and the latter is guided by the guidance laser (11).

7. A use of the armored vehicle according to any one of claims 1 to 5, in a situation involving firing at a moving target, controlled driving of the armored vehicle, vibrations or strong wind.
